# EUROPEAN PATENT APPLICATION

(11) **EP 4 851 244 A1**
(43) Date of publication of application: **09.12.2026**
(21) Application number: 25181273.1
(22) Date of filing: 06.06.2025
(51) Int. Cl.: C08L 23/04, C08L 23/0807

(54) **THERMOPLASTIC COMPOSITION**

(71) Applicant: SABIC Global Technologies B.V., 4612 PX Bergen op Zoom (NL)
(72) Inventor: DUCHATEAU, Robbert, 6160 GA Geleen (NL); JASINSKA-WALC, Lidia, 6160 GA Geleen (NL); SZOT, Wojciech, 80-222 Gdansk (PL); NOWICKA, Weronika, 80-222 Gdansk (PL)
(74) Representative: Sabic Intellectual Property Group

(57) **Abstract**

Disclosed herein is a thermoplastic composition comprising polypropylene, polyethylene and a compatibiliser, wherein said compatibiliser is a block copolymer comprising at least one polyethylene block and at least one polypropylene block, and wherein the blocks of the block copolymer are chemically linked through a linking group comprising at least one heteroatom. The block-copolymer enhances the toughness of the polypropylene and polyethylene mixture.

## Description

The present invention relates to a thermoplastic composition comprising polyethylene, polypropylene and a compatibiliser.

Compositions of polypropylene and polyethylene are desirable as they potentially allow tuning of the material properties by selecting the type and amounts of the individual components. However, it is well known that polyethylene and polypropylene are, in principle, immiscible. It is further a disadvantage that polypropylene and polyethylene substantially do not interact, i.e. are substantially incompatible, so that a blend of polyethylene and polypropylene generally results in a two-phase system having a polypropylene phase and a polyethylene phase with relatively low inter-phase interaction. As a result, such blends typically have poor physical properties. At the same time, streams of recycled polyethylene typically contain a small amount of polypropylene and vice versa, i.e. recycled polypropylene typically contains a small amount of polyethylene. The presence of these small amounts of polyethylene and polypropylene, respectively, reduces the mechanical properties, such as in particular the impact properties, of the recycle streams.

Accordingly, attempts have been made to increase the interaction between the phases in such blends by adding a compatibiliser. Compatibilisers are materials that have affinity with both phases and enhance the bonding strength. As a result, a material with improved properties can be obtained. In an ideal case, an obtained material shows a combination of advantageous properties of each of the blend components, thereby outperforming the individual blend components.

Blends of polypropylene and polyethylene comprising a compatibiliser are known in the art. For example, US 6,114,443 discloses a composition comprising a blend of polyethylene and an isotactic poly-alpha-olefin homopolymer (such as polypropylene), together with a diblock copolymer compatibiliser of polyethylene block and an atactic poly-alpha-olefin block. The diblock compatibiliser of this US patent may be prepared using sequential polymerisation of the monomers for each block in the presence of a metallocene catalyst.

WO2016/188817 discloses a composition comprising polypropylene, polyethylene and a compatibiliser, wherein said compatibiliser is a non-aromatic polyester having an average M/E ratio of at least 10, wherein M is the number of backbone carbon atoms in the polyester not including the carbonyl carbons and E is the number of ester groups in the polyester. In that disclosure the non-aromatic polyester is used as a compatibiliser leading to a polyethylene and polypropylene blend wherein there is a more gradual transition between the polypropylene and polyethylene phases in the blend.

The article ACS Macro Lett. 2020, 9, 1161-1166 discloses a composition comprising polypropylene, polyethylene and a compatibiliser, wherein said compatibiliser is an HDPE-graft-iPP copolymer prepared using the "grafting-through" technology by copolymerization of ethylene and vinyl-terminated iPP macromonomers.

The article Macromolecules 2022, 55, 6435-6442 discloses the use of iPP-graft-HDPE copolymers as effective compatibilizers for HDPE/iPP blends.

The article of Eagan et al., Science 355, 814-816 (2017) 24 February 2017, discloses the use of polyethylene (PE)/isotactic polypropylene (iPP) multiblock copolymers synthesized using an isoselective alkene polymerization initiator. These polymers can weld common grades of commercial PE and iPP together, depending on the molecular weights and architecture of the block copolymers. Interfacial compatibilization of phase-separated PE and iPP with tetrablock copolymers was disclosed in this article to enable morphological control, transforming brittle materials into mechanically tough blends.

The manufacture of the PE/iPP block or graft copolymers is challenging as it may require a complex reactor setup for example involving the use of multiple reactors in series. Moreover, depending on the reactor design, there may be limitations with regards the number of polyethylene and/or polypropylene blocks and/or their respective chain block lengths.

The present invention provides for an alternative method of manufacturing block copolymers capable of compatibilisation of blends of polyethylene and polypropylene.

Accordingly, the present invention relates to a thermoplastic composition comprising polypropylene, polyethylene and a compatibiliser, wherein said compatibiliser is a block copolymer comprising at least one polyethylene block and at least one polypropylene block, and wherein the blocks of the block copolymer are chemically linked through a linking group comprising at least one heteroatom.

The present inventors have found that the linking group comprising the heteroatom(s) does not affect the compatibilising effect of the block-copolymer. As a result, the present inventors have found a way to manufacture a compatibiliser for use in compositions comprising polyethylene and polypropylene that is very flexible in terms of copolymer composition, and wherein said block copolymer composition can be tuned towards the polyethylene and polypropylene mixture in which it will be used.

### Polyethylene

The polyethylene in the thermoplastic composition according to the present invention may be a very low density polyethylene (VLDPE), linear low density polyethylene (LLDPE), low density polyethylene (LDPE), medium density polyethylene (MDPE), high density polyethylene (HDPE). The polyethylene may also be a mixture of at least two or at least two types of the foregoing polyethylenes. For example, the polyethylene may be a mixture of LLDPE and LDPE or it may be a mixture of two different types of LDPE.

The terms VLDPE, LDPE, LLDPE, MDPE and HDPE are known in the art. Very low density polyethylene (VLDPE) generally means polyethylene with a density of less than 915 kg/m³. Linear low density polyethylene and low density polyethylene means polyethylene with a density of from 915 to 935 kg/m³. High density polyethylene means polyethylene with a density of more than 935 kg/m³.

Preferably, the melt flow rate of the polyethylene is from 0.1 - 100 g/10 min as measured in accordance with ISO 1133 (2.16 kg, 190 °C).

The polyethylene may comprise or consist of recycled polyethylene. Accordingly, the polyethylene may comprise, based on the weight of the polyethylene at least 10 wt.%, preferably at least 25 wt.%, more preferably at least 50 wt.%, at least 75 wt.%, of recycled polyethylene. More preferably the polyethylene comprises at least 90 wt.%, at least 95 wt.% or at least 99 wt.% of recycled polyethylene. The polyethylene may consist of recycled polyethylene.

### Polypropylene

The polypropylene in the thermoplastic composition may be:
- one or more of a propylene homopolymer,
- one or more of a propylene - α-olefin random copolymer, preferably a propylene ethylene or a propylene C₄ - C₈ α-olefin random copolymer,
- one or more of a propylene - α-olefin block copolymer,
- one or more of a heterophasic polypropylene copolymer comprising a matrix phase and a disperse phase, the matrix phase consisting of a propylene homopolymer and/or a propylene copolymer with up to 3 wt.% of ethylene and/or at least one C₄ - C₈ α-olefin, the wt.% being based on the matrix phase, and the disperse phase consisting of an ethylene - C₃ - C₈ α-olefin copolymer, a mixture of any of the foregoing polypropylenes.

While it is preferred that the polypropylene is at least partially crystalline, the polypropylene may have a very low or no crystallinity. It is preferred that the polypropylene comprises isotactic polypropylene.

If the polypropylene is a heterophasic copolymer it is preferred that the matrix phase consists of a propylene homopolymer or a propylene - ethylene copolymer with up to 3 wt.% of ethylene and further that the disperse phase consists of an ethylene propylene copolymer with from 20 - 80 wt.% of propylene and 80 - 20 wt.% of ethylene, the wt.% based on the disperse phase. For the avoidance of doubt the term consisting in the context of the heterophasic copolymers means that no other polymers apart from the polymers making up the matrix and disperse phase are present. The matrix and/or disperse phase may contain minor amounts of other components such as in particular antioxidants, light stabilisers, UV stabilisers and the like. Such components are present in an amount of at most 3 wt.%, at most 2 wt.% more preferably at most 1 wt.% based on the weight of the heterophasic copolymer.

The polypropylene is preferably a propylene homopolymer or a propylene ethylene or a propylene C₄ - C₈ α-olefin random copolymer. The random copolymer contains at most 5 wt.%, based on the weight of the copolymer, of said ethylene or α-olefin. The random copolymer is preferably a propylene - ethylene random copolymer.

Preferably the melt flow rate of the polypropylene is from 0.1 - 100 g/10min as measured in accordance with ISO 1133 (2.16 kg, 230 °C). More preferably the melt flow rate is from 5.0 to 60 g/10 min.

The polypropylene may comprise or consist of recycled polypropylene. Accordingly, the polypropylene may comprise, based on the weight of the polypropylene at least 10 wt.%, preferably at least 25 wt.%, more preferably at least 50 wt.%, at least 75 wt.%, of recycled polypropylene. More preferably the polypropylene comprises at least 90 wt.%, at least 95 wt.% or at least 99 wt.% of recycled polypropylene. The polypropylene may consist of recycled polypropylene.

### Compatibiliser

The compatibiliser in accordance with all aspects of the invention disclosed herein is a block copolymer comprising at least one polyethylene block and at least one polypropylene block, and wherein the blocks of the block copolymer are chemically linked through a linking group comprising at least one heteroatom. The heteroatom or heteroatoms originate from the method used to manufacture the compatibiliser.

Typically, the compatibiliser is manufactured using a condensation reaction, such as for example by reacting carboxylic acid functional groups with alcohol or amine functional groups. Accordingly, the linking group in the compatibiliser, i.e. in the block copolymer, is preferably selected from an ester group, a carbonate group, an amide group, or an urethane group, preferably an ester group. For the avoidance of doubt, while it is preferred that the linking groups in the block copolymer are of the same type, the present invention is not strictly limited to this, and within the block copolymer the linking groups may be the same or different. Likewise, the compatibiliser in the thermoplastic composition of the invention may be a mixture of block-copolymers wherein the block copolymers have the same or different linking groups either from one block copolymer to another or within the block copolymer.

The number average molecular weight of each polyethylene block in the block-copolymer, i.e. the compatibiliser, is preferably from 1,000 to 10,000 g/mol and/or the number average molecular weight of each polypropylene block is preferably from 1,000 to 10,000 g/mol, wherein the number average molecular weight is determined in accordance with the method set out herein. Preferably the number average molecular weight is from 1,500 to 9000 g/mol, 2,000 to 8,000 g/mol 3,000 to 7,000 g/mol or 4,000 to 6,000 gram/mol. The number average molecular weight may be from 1,200 to 5,000 or 2,000 to 4,000 gram/mol.

The number average molecular weight of the block copolymer constituting the compatibiliser is preferably from 5,000 to 250,000 g/mol determined in accordance with the method set out herein. Preferably the number average molecular weight of the block copolymer is from 5,000 to 250,000, preferably 10,000 to 150,000, preferably 20,000 to 100,000 g/mol.

The molar ratio of ethylene and propylene in the block copolymer is preferably from 0.5 to 2 mol ethylene per mol propylene, preferably from 0.7 to 1.5, more preferably from 0.8 to 1.2. This molar ratio may be selected based upon the amount of polypropylene and polyethylene in the thermoplastic composition. For the avoidance of doubt, the molar ratio is to be understood as the molar ratio of the amount of ethylene monomer units, or fragments, in the polyethylene and propylene monomer units in the polypropylene.

The weight ratio of polyethylene and polypropylene in the block copolymers is preferably from 0.3 to 3.0 gram polyethylene per gram polypropylene, more preferably 0.5 to 2.0, even more preferably from 0.7 to 1.5.

The degree of polymerisation, defined as the average total number of blocks, i.e. polyethylene and polypropylene blocks, constituting the block copolymer, is preferably at least 2, more preferably at least 4, more preferably at least 10 and preferably at most 50. More preferably the average total number of blocks is at most 30, such as from 10 to 25. Within the preferred range of 4 to 10, the present inventors have found that the block copolymer shows preferred compatibilisation between polyethylene and polypropylene in the thermoplastic composition. If the block copolymer only contains two or three blocks and the number average molecular weight of the polyethylene and polypropylene blocks is less than about 5,000 g/mol, then the compatabilising effect of the block copolymer significantly drops. Realistically there is no need for a very high number of blocks.

The compatibiliser, i.e. the block copolymer is preferably manufactured using a polycondensation reaction of functionalised polyethylene oligomers and functionalised polypropylene oligomers.

The functionalities can be selected to arrive at a desired block configuration.

In an embodiment the polyethylene oligomer is functionalised, preferably end-functionalised, with hydroxyl groups and the polypropylene oligomer is functionalised, preferably end-functionalised with carboxylic acid or ester groups. In a similar embodiment the polyethylene oligomer is functionalised, preferably end-functionalised, with carboxylic acid or ester groups and the polypropylene oligomer is functionalised, preferably end-functionalised with hydroxyl groups. In this embodiment alternating block copolymers are obtained in a polycondensation reaction.

In another embodiment either or both polyethylene oligomer and polypropylene oligomer are functionalised, preferably end-functionalised, with either hydroxyl groups or carboxylic acid or ester groups. In this embodiment the distribution of blocks will have more variation and a statistical random block copolymer will be obtained.

In another embodiment both the polyethylene oligomer and polypropylene oligomer are functionalised, preferably end-functionalised, with the same functionality such as hydroxyl groups or carboxylic acid or ester groups and are copolymerized with a linking compound consisting of 2 or more, preferably 2 to 4, more preferably 2 to 3 or a combination of 2 and 3 or 4 complementary functional groups such as carboxylic acid groups or hydroxyl groups. Examples of such a linking compound include ethylene glycol, glycerol, trimethanol ethane, succinic acid, citric acid, pentaerythritol and trimethylolpropane.

Alternative to the combination of carboxylic acid and alcohol functionalities other pairs of functional groups that can react to form block copolymers include alcohol and/or amine-functionalities on the one hand and acid chloride-, ester-, anhydride-, carbonate-, aldehyde- or isocyanate-functionalities on the other.

For the avoidance of doubt, the polyethylene and/or polypropylene blocks in the block copolymer do not contain any heteroatoms other than the heteroatoms of the linking group.

### Manufacture of the block copolymers

The block copolymers can be manufactured with methods known to the skilled person. By way of example, the block copolymer may be manufactured by a method comprising the reaction of functionalised polyethylene oligomers or polypropylene oligomers, comprising first functional end groups, with polypropylene oligomers or polyethylene oligomers, comprising second functional groups, wherein the first and second functional groups react to form a linking group comprising at least one heteroatom.

Alternatively, by way of example, the block copolymer may be manufactured by a method comprising reacting functionalised polyethylene oligomers and polypropylene oligomers, comprising first functional end groups, with a linking compound comprising second functional groups, wherein the first and second functional groups react to form a linking group comprising at least one heteroatom. The linking compound is a preferably a non-polymeric compound and preferably having two functional groups as explained above.

It is preferred that the fist functional groups are hydroxyl groups, and the second functional groups are carboxylic acid groups, carbonate groups or isocyanate groups.

The method can be carried out in a similar way as other polycondensation reactions are carried out. For example, the functionalised oligomers are reacted in molten form and any condensation by-products, such as for example water or methanol, are withdrawn from the reaction mixture thereby advancing the reaction towards completion. A suitable transesterification catalyst is typically used.

There are various strategies to produce the end-functionalized oligomer blocks either starting from polyolefins or from one or more olefins as feedstock. For example, sequential dehydrogenation, cross metathesis, and hydrogenation of polyolefins (e.g. J. Am. Chem. Soc. 2022, (144), 23280-23285), mild pyrolysis of poly(α-olefins) followed by functionalization (e.g. J. Polym. Sci. Part A Polym. Chem. 2006, (44), 3406-3409), ring-opening metathesis polymerization of (substituted) cyclooctene in the presence of a functionalized chain transfer agent, followed by hydrogenation (e.g. Macromolecules 2014, (47), 479-485) or coordinative chain transfer polymerization of one or more olefins in the presence of a functionalized chain transfer agent, followed by a second functionalization step (e.g. Nature Commun. 2024, (15), 1, 1462).

As explained, it is preferred that the functional groups in a polymer chain are the same and are preferably located at the ends of the chain. The invention is, however, not limited to this and the polymer chains may also comprise different types of functional groups at the chain ends. Optionally, functional groups are located along the chain or in branches, provided, however, that the molecular weight between the nearest functional groups is at least 500 g/mol, more preferably at least 1,000 g/mol and preferably from 1,000 to 10,000 g/mol.

For the avoidance of doubt, a functional group at the end of a polyolefin chain may be bonded to the final carbon in said chain or to the forelast, i.e. 2^{nd} carbon of the chain.

### Composition

The amounts of polypropylene and polyethylene in the thermoplastic composition may vary within wide limits.

For polypropylene-rich compositions the amount of polypropylene may vary from 50 to 99 wt.% based on the total amount of polyethylene and polypropylene. Preferably, the amount of polypropylene is from 70 to 98 wt.%, from 80 to 95 wt.% 90 - 95 wt.%, based on the total amount of polyethylene and polypropylene.

Typically, recycled polypropylene contains an amount of polyethylene of at most 10 wt.%, more preferably at most 5 wt.%, such as from 1 to 5 wt.% and based on the weight of the recycled polypropylene.

For polyethylene-rich compositions the amount of polyethylene may vary from 50 to 99 wt.%, on the basis of the total amount of polyethylene and polypropylene. Preferably, the amount of polyethylene is from 70 to 98 wt.%, from 80 to 95 wt.%, or from 90 - 95 wt.%, on the basis of the total amount of polyethylene and polypropylene.

Typically, recycled polyethylene contains an amount of polypropylene of at most 10 wt.%, more preferably at most 5 wt.%, such as from 1 to 5 wt.% and based on the weight of the recycled polyethylene.

The amount of compatibiliser is preferably from 0.5 - 10 wt.%, preferably from 1 - 5 wt.%, more preferably from 1 - 2.5 wt.% based on the combined weight of the polyethylene, polypropylene and the compatibiliser.

The polypropylene and or polyethylene may comprise or consist of mechanically recycled polypropylene and/or polyethylene respectively.

The thermoplastic composition may comprise further non-polymeric components such as antioxidants, inorganic fillers, glass fibers, UV stabilisers, mould release agents, flame retardants, colorants and the like.

Typically, however, the thermoplastic composition preferably does not comprise a polymer component other than optionally poly-tetrafluoro-ethylene as an anti-drip agent.

In an aspect the thermoplastic composition of the present invention preferably comprises, based on the weight of the thermoplastic composition, (A) polypropylene, (B) polyethylene, (C) from 0.5 - 10 wt.% of the compatibiliser and (D) from 0 - 5 wt.% of optional further components, wherein the total amount of components (A), (B), (C) and (D) is 100 wt.%. The preferred features with regards to these components in the thermoplastic composition are as set out herein.

The thermoplastic composition in accordance with the invention preferably comprises from 0 - 3 wt.%, preferably from 0 - 2 wt.% of component (D).

The optional components (D) typically comprise one or more commonly used additives for polymer compositions such as antioxidants, inorganic fillers, UV stabilisers, mould release agents, flame retardants, colorants and the like.

The thermoplastic composition disclosed herein may be combined with further polymeric components and or other materials to form a compound comprising the thermoplastic composition. The further polymeric components may comprise or consist of polyolefin impact modifiers, which are typically substantially amorphous copolymers of ethylene and one or more α-olefins. Non polymeric materials may also be added so as to form a compound having certain desirable mechanical properties. For example, the thermoplastic composition may be combined with glass fibers or inorganic filler so as to obtain a material having an increases tensile strength. Typically, however, an increase in tensile strength by addition of inorganic fillers and/or glass fibers results in reduced impact resistance. Accordingly, the thermoplastic composition may be combined with both glass fibers and/or inorganic fillers as well as a polymeric impact modifier, such as in particular a polyolefin impact modifier.

Thus, in an aspect the present invention relates to a compound comprising the thermoplastic composition as disclosed herein and at least one inorganic filler and/or at least one impact modifier. The amount of inorganic filler in the compound may be from 1 - 50 wt.%, preferably from 1 - 20 wt.% based on the weight of the compound and preferably selected from the group consisting of talc, mica, clay, glass fibers, glass flakes, glass beads. The amount of impact modifier is preferably from 1 - 10 wt.%, based on the weight of the compound, and preferably the impact modifier is a polymeric impact modifier, preferably a polyolefin impact modifier, and preferably selected from one or more of an ethylene elastomer, ethylene-propylene elastomer or ethylene-propylene-diene elastomer.

The melt flow rates of the compatibiliser, polypropylene and polyethylene are selected such that homogeneous blends can be prepared using common melt blending techniques, such as extrusion or internal mixing. In this respect a homogeneous blend means a blend wherein the polyethylene and polypropylene concentrations are distributed throughout the material essentially evenly, while noting that the polyethylene may form a disperse phase in the polypropylene matrix or vice versa. The compatibiliser needs to have a melt flow such that during the melt processing of the thermoplastic composition the compatibiliser can migrate, at least in part, to the interface of the polyethylene and polypropylene phase.

The ratio of melt flow rate of the polymer forming the disperse phase and the compatibiliser may be from 0.05 - 50, more preferably from 0.1 - 10 even more preferably from 0.5 - 5, when measured under similar conditions. Likewise, the ratio of the melt flow rate of the polypropylene and the melt flow rate of the polyethylene may be from 0.05 - 50, more preferably from 0.1 - 10 even more preferably from 0.5 - 5, when measured under similar conditions, i.e. the same temperature and load applied in a melt flow rate test setup such as for example described in ISO 1133.

### Articles

The present invention further relates to articles comprising or consisting of the thermoplastic composition or the compound as disclosed herein. Generally, the thermoplastic composition is converted into an article using a moulding technique such as injection moulding, extrusion moulding, blow moulding and compression moulding. Accordingly, the present invention also relates to an article obtained by moulding the thermoplastic composition or compound according to the present invention. It is also possible to manufacture profiles or tubes by means of profile or tube extrusion.

Articles may be automotive interior articles, automotive exterior articles, household appliances, pipes, films, sheets, containers, water containers, infuse bags.

### Use

In another aspect the present invention relates to the use of a block copolymer as defined herein as a compatibiliser in a thermoplastic composition comprising polyethylene and polypropylene. More in particular, the present invention relates to the use of a block copolymer as defined herein as a compatibiliser in a thermoplastic composition comprising polyethylene and polypropylene for improving the toughness and possibly other mechanical properties of said thermoplastic composition. The preferred embodiments or aspects as set out herein for the thermoplastic composition and the compatibiliser (i.e. the block copolymer) likewise apply to this use.

### Methods

The number average molecular weight (*M*ₙ), weight average molecular weight (*M*_{w}), and polydispersity index (PDI) of the functionalised polyolefin are determined in accordance with ASTM D6474-12. High-Temperature Size Exclusion Chromatography (HT-SEC) measurements were performed at 150 °C on a Polymer Char GPC-IR^{®} built around an Agilent GC oven model 7890, equipped with an autosampler and the Integrated Detector IR4. 1,2-Dichlorobenzene (o-DCB) was used as an eluent at a flow rate of 1 mL/min. The data were processed using Calculations Software GPC One^{®}. The molecular weights (*M*ₙ, *M_{w}*) were calculated with respect to polystyrene standards. The polydispersity Index (PDI) is calculated by dividing the weight average molecular weight (*M*_{w}) by the number average molecular weight (*M*ₙ).

Differential Scanning Calorimetry (DSC). Thermal analysis was carried out on a DSC250 from TA Instruments in a N₂ atmosphere at a heating rate of 10 °C·min⁻¹. First and second runs were recorded after cooling to -40 °C. The melting temperatures (*T*ₘ) were deducted from the second cooling and heating runs.

¹H NMR. Analysis was carried out at 125 °C using deuterated tetrachloroethane (TCE-D2) as solvent and recorded using 5 mm tubes on a Bruker Avance500 spectrometer operating at a frequency of 400 MHz. Chemical shifts are reported in ppm versus tetramethylsilane (TMS, 0.00 ppm) and were determined by reference to the residual solvent protons.

Tensile tests were performed using a Zwick type Z020 tensile tester equipped with a 2.5 kN load cell according to ISO 527-3 standard (specimen type B5) and at a temperature of 23°C. The pressed film samples, used for the tensile test, were prepared via compression-molding using LabEcon 600 high-temperature press (Fontijne Presses, the Netherlands). A grip-to-grip separation of 15 mm was used. The samples were prestressed to 3 N, then loaded with a constant crosshead speed 15 mm/min. The reported values are an average of at least 5 measurements.

### Synthesis examples:

### Synthesis 1: Synthesis of α,ω-dihydroxyl-terminated oligoethylene

Reactions were performed using standard Schlenk techniques. cis-Cyclooctene (COC) (50.0 g, 0.45 mol), 1,4-bis(acetoxy)-2-butene (CTA) (3.9 g, 22 mmol) and 2^{nd} generation ruthenium Grubbs catalyst (14.4 mg, 23 µmol) dissolved in a minimal amount of toluene were transferred into the flask and secured with a stopper. Then the flask was placed in an oil-bath preheated to 50 °C. After 24 h, the reaction mixture was opened, and the obtained material was transferred into acidified methanol (0.1 M HCl) and stirred for 1 h. To remove catalyst residues, the crude product was dissolved in toluene (20 mL), heated to 100 °C and subsequently precipitated in a large excess (200 mL) of slightly acidified cold methanol. The mixture was allowed to warm up to room temperature and the precipitated polymer was isolated by filtration, followed by washing with methanol. The filtrated methanol solution colored yellow. The purification step was repeated until the methanol was colorless and the polymer product a white solid. Subsequently, the dried polymer was dissolved in toluene (100 mL) and THF (300 mL) at 80 °C under a nitrogen atmosphere. Then the mixture was cooled by placing it in ice bath and EtONa (200 mL, 0.5 M) was gradually added, and the mixture was left stirring overnight. The resulting yellow mixture was poured into acidic methanol (0.1 M HCl) and subsequently filtered to give a white solid that was identified as α-ω-dihydroxyloligocyclooctene. The material was then hydrogenated to afford α,ω-dihydroxyl-terminated oligoethylene using standard procedure as described in the literature (C. Fraser et al. Macromolecules 1995, 28 (21), 7256-7261).

### Synthesis 2: Synthesis of hydroxyl-terminated oligopropylene

Vinylidene-terminated oligopropylene (2 g, 0.57 mmol), purchased from Baker Hughes (X-10055), was dispersed in toluene (80 mL) and heated to 60 °C. 9-BBN (13.3 equivalents in respect to vinylidene-terminated oligopropylene: 15 mL, 0.5 M solution in THF, 7.5 mmol) was added dropwise under nitrogen atmosphere to the mixture and refluxed for 5 h. Then NaOH was added dropwise to the mixture with ratio 8:1 in respect to 9-BBN (2.4 g in 15 mL of water) and stirred for 10 minutes. Subsequently, approximately 4 mL of methanol were added to the mixture (4:1 MeOH:9-BBN). The mixture was cooled by placing it in ice bath and then it was treated with 12 equivalents of hydrogen peroxide (9.4 mL, 35% solution). The mixture was stirred for another 18 h under nitrogen atmosphere and precipitated in 500 mL of methanol. Then the mixture was stirred for 2 h, filtered and resulting white solid was washed 3 times with 50 mL of methanol and dried.

### Synthesis 3: Synthesis of α,ω-dihydroxyl-terminated oligopropylene, route I

Divinylidene-terminated oligopropylenes were prepared by mild pyrolysis of high molecular weight polypropylene according to the procedure described by Sawaguchi and coworkers (T. Sawaguchi et al., Macromolecules 1995, 28, (24), 7973). Such divinylidene-terminated oligopropylene (5 g, 1.7 mmol) was dispersed in toluene (200 mL) and heated to 60 °C. 13.3 equivalents of 9-BBN in respect to vinylidene-terminated oligopropylene. 9-BBN (75 mL, 0.5 M solution in THF, 37.5 mmol) was added dropwise under nitrogen atmosphere to the mixture and refluxed for 5 h. Then NaOH was added dropwise to the mixture with ratio 8:1 in respect to 9-BBN (12 g in 60 mL of water) and stirred for 10 minutes. Subsequently, approximately 18 mL of methanol were added to the mixture (4:1 MeOH:9-BBN). The mixture was cooled by placing it in ice bath and then it was treated with 12 equivalents of hydrogen peroxide (47 mL, 35% solution). The mixture was stirred for another 18 h under nitrogen atmosphere and precipitated in methanol (500 mL). Then the mixture was stirred for 2 hours, filtered and the resulting white solid was washed with methanol (3 × 50 mL) and dried.

### Synthesis 4: Synthesis of α,ω-dihydroxyl-terminated oligopropylene, route II

Propylene polymerization reactions were carried out in a 2 L stainless-steel Büchi reactor under coordinative chain transfer polymerization (CCTP) conditions. Prior to the polymerization, the reactor was dried in vacuo at 100 °C and flushed with nitrogen three times. As a selected example (Table 1, entry 3), pentamethylheptane (PMH, 1.0 L) was introduced to the reactor followed by zinc bis(hex-5-en-1-yloxy)triisopropylsilane (i.e. fCTA; 1.74 g, 0.25 M solution in toluene, 3.0 mmol). The reactor was subsequently charged with propylene (100 g) and the reactor was heated to 115 °C. After the temperature and pressure stabilized, the reaction was started by injection a mixture of the catalyst precursor 1 (0.4 mg; 0.4 µmol; in 15 mL toluene) and dMAO (1.2 mL; 0.36 mmol; 2 wt. % in toluene) into the stirred (600 rpm) reactor. The polymerization reaction was followed by monitoring the propylene uptake (semi-batch mode). The reaction was terminated by closing the feed line and venting monomer from the reactor using vent line after which dry air (2 bara) was added. The reaction mixture was stirred for 2 hours, then the mixture was drained under nitrogen atmosphere through a bottom valve into a Schott bottle containing acidified methanol (1 L, 5.0 vol% of hydrochloric acid 37 %). The thus obtained mixture was heated to 60 °C under nitrogen and stirred for 36 hours. Subsequently, the α,ω-dihydroxyl-terminated oligopropylene was filtrated, treated with Irganox 1010 (5 mL, 5 mM in acetone, 25 µmol) and dried under reduced pressure at 80 °C for 24 h.

### Synthesis 5: Synthesis of α,ω-dihydroxyl-terminated oligo(ethylene-co-1-octene)

The copolymerization reactions were carried out in a 2 L stainless-steel Büchi reactor under CCTP conditions. Prior to the polymerization, the reactor was dried in vacuo at 100 °C and flushed with nitrogen three times. As a selected example (Table 2, entry 1), pentamethylheptane (PMH, 1.0 L) was introduced to the reactor followed by zinc bis(hex-5-en-1-yloxy)triisopropylsilane (i.e. fCTA; 1.74 g, 0.25 M solution in toluene, 3.0 mmol) and 1-octene (31.2 mL. 5.0 M in toluene, 200 mmol). The reactor was subsequently charged with ethylene (35 g) and the reactor was heated to 115 °C. After the temperature and pressure stabilized, the reaction was started by injection a mixture of the catalyst precursor 1 (0.4 mg; 0.4 µmol; in 15 mL toluene) and dMAO (0.11 mL; 0.05 mmol; 3 wt. % in toluene) into the stirred (600 rpm) reactor. The polymerization reaction was followed by monitoring the ethylene uptake (semi-batch mode). The reaction was terminated by closing the feed line and venting monomer from the reactor using a vent line. Subsequently, dry air (2 bara) was added and the reaction mixture was stirred for 2 hours after which the mixture was drained under nitrogen atmosphere through a bottom valve into a Schott bottle containing acidified methanol (1 L, 5.0 vol% of hydrochloric acid 37 %). The thus obtained mixture was heated to 60 °C under nitrogen and stirred for 36 hours. Subsequently, the polymer was filtrated, treated with Irganox 1010 (5 mL, 5 mM in acetone, 25 µmol) and dried under reduced pressure at 80 °C for 24 h.

**Table 1. Synthesis of α,ω-dihydroxyl-oligopropylenes (synthesis 4).**

| Example # | fCTA_{feed} mmol | *M*ₙ kg/mol | *PDI* | *T*ₘ °C |
|---|---|---|---|---|
| 1.1 | 1.0 | 8.7 | 2.8 | 147.8 |
| 1.2 | 2.0 | 7.0 | 2.6 | 146.8 |
| 1.3 | 3.0 | 5.9 | 2.5 | 146.7 |
| 1.4 | 4.0 | 3.4 | 2.2 | 144.8 |

| | | | | |
|---|---|---|---|---|
| fCTA = zinc bis(hex-5-en-1-yloxy)triisopropylsilane; quenching agent: dry air. | | | | |

**Table 2. Synthesis of α,ω-dihydroxyl-oligo(ethylene-co-1-octene)s (synthesis 5).**

| Example # | fCTA_{feed} mmol | 1-octene_{feed} mmol | *M*ₙ kg/mol | *PDI* | *T*ₘ °C |
|---|---|---|---|---|---|
| 2.1 | 3.0 | 200 | 5.1 | 2.2 | 104.8 |
| 2.2 | 3.0 | 125 | 6.2 | 2.3 | 115.5 |
| 2.3 | 6.0 | 125 | 3.2 | 2.1 | 115.9 |
| 2.4 | 9.0 | 125 | 2.0 | 2.0 | 114.7 |

| | | | | | |
|---|---|---|---|---|---|
| fCTA = (hex-5-en-1-yloxy)triisopropylsilane; quenching agent: dry air. | | | | | |

### Synthesis 6: Synthesis of oligopropylene-succinate

Hydroxyl-terminated oligopropylene (1.0 g, 0.3 mmol, *M*ₙ of 3.5 kg/mol, *PDI* of 1.8) synthesized by synthesis 2, succinic acid anhydride (60 mg, 0.6 mmol) and dimethylamino-pyridine (DMAP) (37 mg, 0.3 mmol) were dissolved in toluene (30 mL) and the solution was heated to reflux (110 °C) for 24 hours. The product mixture was poured into methanol to precipitate the oligopropylene-succinate product. The product was analyzed by DSC and HT-SEC, revealing a *T*ₘ of 141 °C, an *M*ₙ of 3.8 kg/mol and a *PDI* of 2.4.

### Synthesis 7: Synthesis of oligopropylene-α,ω-disuccinate

A similar procedure was followed as for synthesis 6 but starting from dihydroxyl-terminated oligopropylene by synthesis 3 (1.0 g, 0.3 mmol, *M*ₙ of 3.6 kg/mol, *PDI* of 1.8), succinic acid anhydride (130 g, 1.3 mmol) and dimethylamino-pyridine (DMAP) (73 mg, 0.6 µmol). The product was analyzed by DSC and HT-SEC, revealing a *T*ₘ of 145 °C, and *M*ₙ of 4.1 kg/mol and a *PDI* of 2.3.

### Synthesis 8: Synthesis of PP-PE-PP triblock copolymer

Oligopropylene-succinate (2.0 g, 0.53 mmol, *M*ₙ of 3.8 kg/mol, *PDI* of 2.4) synthesized by synthesis 6 was mixed with half an equivalent of dihydroxyl-terminated oligoethylene synthesized by synthesis 1 (0.8 g, 0.27 mmol, *M*ₙ of 2.9 kg/mol, *PDI* of 1.9) and tin 2-ethylhexanoate solution in toluene (93 mg, 2.3 µmol, 1 wt.% in toluene) and the mixture was heated under nitrogen to 190 °C for 5 hours, following by heating to 230 °C for 2 hours under vacuum. After cooling, the solid product was dissolved in hot toluene (150 mL) and precipitated in methanol (250 mL) and washed with additional methanol (3 x 50 mL). The thus obtained product (2.1 g) was analyzed by ¹H NMR, DSC and HT-SEC, revealing a propylene/ethylene ratio of approx. 2:1, *T*ₘ of 114.5/144.2 °C, and *M*ₙ of 13.1 kg/mol and a *PDI* of 3.2.

### Synthesis 9: Synthesis of PE-PP multiblock copolymer

Oligopropylene-disuccinate (2.0 g, 0.49 mmol, *M*ₙ of 4.1 kg/mol, *PDI* of 2.5) synthesized by synthesis 7 was mixed with an equivalent of dihydroxyl-terminated oligoethylene synthesized by synthesis 1 (1.4 g, 0.49 mmol, *M*ₙ of 2.9 kg/mol, *PDI* of 1.9) and tin 2-ethylhexanoate solution in toluene (182 mg, 4.5 µmol, 1 wt.% in toluene) and the mixture was heated under nitrogen to 190 °C for 11 hours, following by heating to 210 °C for 5 hours under vacuum. Then, another portion of tin 2-ethylhexanoate solution in toluene (182 mg, 4.5 µmol, 1 wt.% in toluene) was added and the mixture was heated under nitrogen to 230 °C for 9.5 hours. After cooling, the solid product was dissolved in hot toluene (300 mL) and precipitated in methanol (500 mL) and washed with additional methanol (3 x 50 mL) The thus obtained product (2.94 g) was analyzed by ¹H NMR, DSC and HT-SEC, revealing a propylene/ethylene ratio of approx. 1:1, *T*ₘ of 121.7/141.7 °C, an *M*ₙ of 26.1 g/mol and a *PDI* of 3.7.

**Table 3. Properties of PE-PP multiblock copolymer (Synthesis 9).**

| Entry # | *M*_{w} kg/mol | *M*ₙ kg/mol | PDI | *T*ₘ °C | *T*_{c} °C | *ΔHₘ J*/*g* | *ε_{b}* % | *σ_{Y} MPa* |
|---|---|---|---|---|---|---|---|---|
| 3.1 | 93.8 | 26.1 | 3.7 | 121.7 | 108.8 | 117.0 | 256 ± 77 | 20 ± 1 |
| | | | | 141.7 | | | | |

| | | | | | | | | |
|---|---|---|---|---|---|---|---|---|
| *ΔHₘ -* Enthalpy of melting; *ε_{b}* - Elongation at break; *σ_{Y}* - Yield stress. | | | | | | | | |

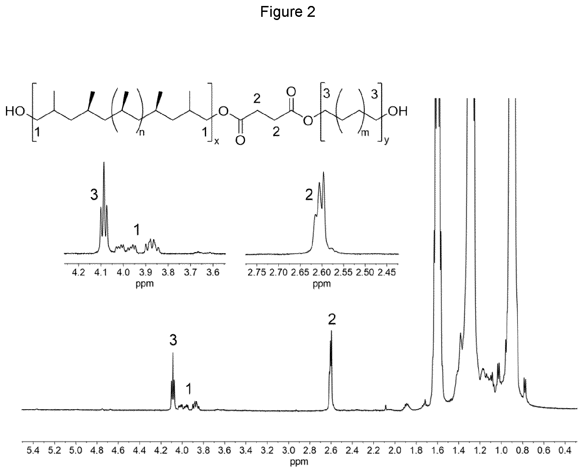

Figure 2 shows a NMR spectrum of a PE-PP multiblock copolymer in accordance with the invention (Synthesis 9; Table 3, Example 3.1) and shows the successful coupling and PP:PE block ratio of 1:2.

### Compatibilization experiments:

Blends of high density polyethylene (HDPE 6246LS), polypropylene (PP527K) and either PP-PE-PP tri-block copolymer or PE-PP tetra-block copolymer were prepared using the same procedure, only differing in the amounts of copolymer, HDPE, and PP. The appropriate amounts of blend components were measured, mixed with antioxidant Irganox 1010 (2500 ppm) and pressed into film, which later was cut and fed into a Process 11 Parallel corotating twin-screw. Extrusion was performed at 190 °C and a screw rotation rate of 120 rpm resulting in a residence time of 1.5 min. To ensure good mixing, each mixture was passed two times through the extrusion. The thus obtained blends were pressed into sheets via compression-molding using LabEcon 600 high-temperature press (Fontijne Presses, the Netherlands). The sheets were analyzed by AFM analyses and from the sheets tensile bars were cut for analysis (ISO 527-3).

**Table 4. Composition and mechanical properties of PE:PP blends compatibilized with PE-PP multiblock copolymer (MBC) (Synthesis 9; Table 3, Entry 3.1).**

| Entry # | PP wt% | PE wt% | MBC wt% | *ε_{b}* % | *σ_{Y} MPa* |
|---|---|---|---|---|---|
| 4.1 | 30 | 70 | 0 | 28 ± 7 | 23 ± 11 |
| 4.2 | 30 | 70 | 5 | 112 ± 48 | 21 ± 8 |

| | | | | | |
|---|---|---|---|---|---|
| *ε_{b}* - Elongation at break; *σ_{Y}* - Yield stress. | | | | | |

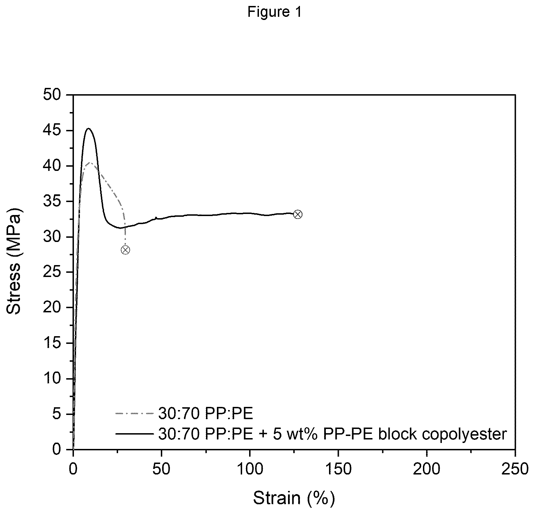

Figure 1 shows a stress-strain curve of a 30:70 blend of polypropylene and polyethylene with and without 5 wt.% of compatibiliser manufactured in accordance with Synthesis 9. Testing was carried out in accordance with the tensile test method disclosed above. From the graph it is concluded that the compatibiliser has a desired effect on the tensile properties of the polyethylene-polypropylene blend.

## Claims

1. Thermoplastic composition comprising polypropylene, polyethylene and a compatibiliser, wherein said compatibiliser is a block copolymer comprising at least one polyethylene block and at least one polypropylene block, and wherein the blocks of the block copolymer are chemically linked through a linking group comprising at least one heteroatom.

2. The thermoplastic composition of claim 1, wherein the linking groups in the block-copolymer are the same of different and selected from an ester group, a carbonate group, an amide group, or a urethane group, preferably an ester group.

3. The thermoplastic composition of claim 1 or 2, wherein the number average molecular weight of each polyethylene block is from 1,000 to 10,000 g/mol and/or the number average molecular weight of each polypropylene block is from 1,000 to 10,000 g/mol, wherein the number average molecular weight is determined in accordance with the method set out in the description.

4. The thermoplastic composition of any one or more of claims 1 - 3, wherein the number average molecular weight of the block copolymer is from 5,000 to 250,000 g/mol determined in accordance with the method set out in the description.

5. The thermoplastic composition of any one or more of claims 1 - 4, wherein the molar ratio of ethylene and propylene of the block copolymer is from 0.5 to 2, preferably from 0.7 to 1.5, more preferably from 0.8 to 1.2.

6. The thermoplastic composition of any one or more of claims 1 - 5, wherein the degree of polymerisation, defined as the average total number polyethylene and polypropylene blocks constituting the block copolymer, is at least 4, preferably at least 10 and preferably at most 50.

7. The thermoplastic composition of any one or more of claims 1 - 6 wherein the amount of compatibiliser is from 0.1 to 10 wt.%, preferably from 0.5 to 5 wt.%, based on combined weight of the polyethylene, polypropylene and the compatibiliser.

8. The thermoplastic composition of any one or more of claims 1 - 7 wherein the amount of polypropylene is from 3 to 97 wt.%, based on the combined weight of the polyethylene and polypropylene.

9. The thermoplastic composition of any one or more of claims 1 - 8, wherein the polyethylene and/or the polypropylene blocks do not contain heteroatoms other than the heteroatoms of the linking group.

10. The thermoplastic composition of any one or more of claims 1 - 9, wherein

11. Article comprising or consisting of the thermoplastic composition of any one or more of claims 1 - 10.

12. Method for the manufacture of the compatibiliser as defined in any of the foregoing claims 1 - 11 comprising:
- reacting functionalised polyethylene oligomers or polypropylene oligomers, comprising first functional end groups, with polypropylene oligomers or polyethylene oligomers, comprising second functional groups, wherein the first and second functional groups react to form a linking group comprising at least one heteroatom,
or,
- reacting functionalised polyethylene oligomers and polypropylene oligomers, comprising first functional end groups, with a linking compound comprising second functional groups, wherein the first and second functional groups react to form a linking group comprising at least one heteroatom and wherein the linking compound forms the link between functionalised polyethylene and/or polypropylene oligomers.

13. The method of claim 12 wherein the first functional groups are carboxylic acid groups or carbonate groups, and the second functional groups are hydroxyl groups, or wherein the second functional groups are carboxylic acid groups or carbonate groups, and the first functional groups are hydroxyl groups.

14. Use of a block copolymer as defined in any of claims 1 - 11 or obtained or obtainable by the method of claims 12 or 13 as a compatibiliser in a thermoplastic composition comprising polyethylene and polypropylene.

15. The use of claim 14 for the purpose of improving the toughness of said thermoplastic composition.
